Europäisches Patentamt

European Patent Office

Office européen des brevets

(11) Veröffentlichungsnummer: **0 254 669**
B1

# (12) EUROPÄISCHE PATENTSCHRIFT

(45) Veröffentlichungstag der Patentschrift:
27.06.90

(21) Anmeldenummer: 87730043.4

(22) Anmeldetag: 21.04.87

(51) Int. Cl.⁵: **C21C 5/48, F16L 39/04**

(54) Metallurgisches Gefäss mit Kippzapfen, insbesondere Stahlwerkskonverter.

(30) Priorität: 24.07.86 DE 3624966

(43) Veröffentlichungstag der Anmeldung:
27.01.88 Patentblatt 88/4

(45) Bekanntmachung des Hinweises auf die Patenterteilung:
27.06.90 Patentblatt 90/26

(84) Benannte Vertragsstaaten:
AT BE DE ES FR GB LU NL

(56) Entgegenhaltungen:
EP-A- 0 032 173
DE-A- 2 703 955
FR-A- 2 340 373

(73) Patentinhaber: MANNESMANN Aktiengesellschaft,
Mannesmannufer 2, D-4000 Düsseldorf 1(DE)

(72) Erfinder: Weingran, Hans, Berglehne 68,
D-4100 Duisburg 26(DE)

(74) Vertreter: Meissner, Peter E., Dipl.-Ing. et al,
Patentanwaltsbüro Meissner & Meissner,
Herbertstrasse 22, D-1000 Berlin 33(DE)

## Beschreibung

Die Erfindung betrifft ein metallurgisches Gefäß mit Kippzapfen, insbesondere einen Stahlwerkskonverter, mit zumindest einer Drehdurchführung in einem der Kippzapfen zur Versorgung von Düsen bzw. Kühlelementen mit gasförmigen und/oder flüssigen und/oder staubförmigen Medien bzw. Kühlmedien, wobei die Drehdurchführung aus einem Stator und einem Rotor besteht und die Medien-Leitungen an den Stator angeschlossen sind und vom Rotor die Medien-Leitungen zu den Düsen bzw. Kühlelementen geführt sind und der Rotor mit dem Kippzapfen verbunden ist.

An metallurgischen Gefäßen werden Drehdurchführungen benötigt, um einen beweglichen Verbraucher (z.B kippbaren Stahlwerkskonverter) mit Medien aus stationären Leitungen zu versorgen.

Es sind mehrere Drehdurchführungen an Kippzapfen von Stahlwerkskonvertern bekannt (Europäische Offenlegungsschriften 0 032 173 und 0 007 418). Bedingt durch die neueren Technologien in der Stahlherstellung, d.h. durch das sogenannte Mantelgasverfahren, werden meist mehr als zwei Medienleitungen, oft sogar bis zu 15 benötigt. Die Anzahl der Medienleitungen bestimmt die Länge der Drehdurchführungen, die bis zu 2.500 mm Länge erreichen. Das Gewicht derartiger Drehdurchführungen beträgt dann mehr als 1.000 kg, wodurch besondere Abstützungen erforderlich werden, die das Gewicht auffangen. Bedingt durch die in der Praxis auftretende Schränkung der Kippzapfen entsteht am Ende der Drehdurchführung eine Taumelbewegung, deren Ausschlag bei derartig großen Längen der Drehdurchführung eine aufwendige Ausbildung der Abstützung erfordert. Derartige Abstützungen müssen daher kardanisch ausgeführt werden. Die Drehdurchführung und die Abstützung benötigen selbstverständlich auch einen erheblichen Raum, der zu anderen Zwecken nicht mehr zur Verfügung steht.

Der vorliegenden Erfindung liegt die Aufgabe zugrunde, die langen und raumbelegenden Drehdurchführungen sowie die damit verbundenen Abstützungen zu vermeiden.

Die gestellte Aufgabe wird bei dem eingangs bezeichneten metallurgischen Gefäß erfindungsgemäß dadurch gelöst, daß Rotor und Stator zumindest auf einem erheblichen Teil ihrer Länge jeweils innerhalb des Kippzapfens angeordnet sind, wobei der Stator den Kern zum Rotor bildet und der Rotor als Hülse zwischen Innenwandung des Kippzapfens und Außenfläche des Stators angeordnet ist und daß die Medien-Leitungen an der Stirnfläche des Stators angeschlossen sind. Vorteilhafterweise wird hier das überwiegende Gewicht der Drehdurchführung im Kippzapfen aufgefangen, so daß besondere Abstützungen entfallen. Weiterhin wird die Taumelbewegung der Drehdurchführung an den Anschlußstellen für die Medien-Zuleitungen auf ein Minimum reduziert. Die Anordnung des Rotors im Kippzapfen bildet außerdem eine bessere Zentrierung für die gesamte Drehdurchführung. Selbst bei Drehdurchführungen in der Größenordnung von 12 bis 15 Medien-Leitungen wird erheblich an Raum eingespart, ohne daß Unterstützungen· erforderlich werden.

Eine Ausgestaltung der Erfindung besteht darin, daß die Drehdurchführung in dem Kippzapfen der Loslager-Seite des Konverterkippgestells angeordnet ist.

Eine andere Verbesserung der Erfindung besteht darin, daß sowohl der Rotor als auch der Stator an ihrem einen Ende jeweils mit einem Anschlagflansch versehen sind. Diese Anschlagflansche legen den axialen Abstand ab Eintritt in den Kippzapfen und damit die Stellung von Ringnuten zwischen Rotor und Stator sehr genau fest.

In der Zeichnung ist einem Ausführungsbeispiel der Erfindung der Stand der Technik vorangestellt, wie nachfolgend beschrieben wird:

Fig. 1 zeigt einen Stahlwerkskonverter im Aufriß mit den bekannten Drehdurchführungen,

Fig. 2 stellt einen Teilquerschnitt durch den Kippzapfen gemäß Fig. 1 der bekannten Ausführungsform dar,

Fig. 3 zeigt einen Stahlwerkskonverter im Aufriß, der mit der Erfindung ausgestattet ist und

Fig. 4 zeigt einen Teilquerschnitt durch den Kippzapfen mit der Erfindung.

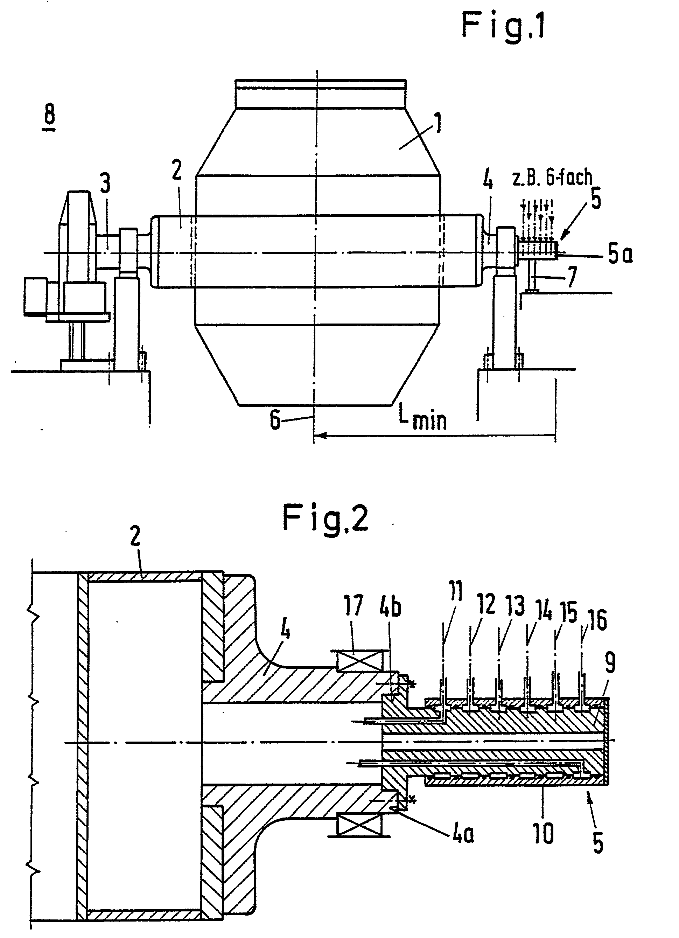

Das metallurgische Gefäß 1 besteht gemäß Fig. 1 aus einem Stahlwerkskonverter, der sich auf wenen Tragring 2 abstützt. Die Abstützung ist im einzelnen nicht dargestellt, weil diese für die Erfindung ohne große Bedeutung ist. An dem Tragring 2 (oder auch an dem Stahlwerkskonverter selbst) sind gleichachsig Kippzapfen 3 und 4 befestigt. Am rechten Kippzapfen 4 (Fig. 1) befindet sich die bekannte Drehdurchführung 5. Wie sich aus dem Abstand Lmin zwischen Gefäßmittellängsachse 6 und dem Ende 5a ergibt, treten Verlängerungen des Kippzapfens 4 von bis zu 2.500 mm und mehr auf, so daß solche Drehdurchführungen 5 mittels einer Abstützung 7 gesichert werden müssen. Außerdem belegen solche bekannten Drehdurchführungen 5, wie sich auch aus Fig. 2 ergibt, den anderweitig in einem Stahlwerk benötigten Raum. Derartige Abstützungen 7 sind auf der Antriebsseite 8 nur unter Schwierigkeiten unterzubringen.

Wie aus Fig. 2 ersichtlich ist, liegt ein Rotor 9, der mit dem Kippzapfen 4 verbunden ist, im Innern eines den Rotor 9 umgebenden Stators 10. An den Stator 10 sind flexible Schlauchleitungen 11, 12, 13, 14, 15, 16 usw. an seiner äußeren Oberfläche angekuppelt. Der Rotor 9 ist an die Stirnfläche 4a des Kippzapfens 4 angeflanscht, wobei sich ein nur kurzer Zentrierabsatz 4b ergibt. Das Gewicht der Drehdurchführung 5 beträgt über 1.000 kg und übt daher ein zusätzliches Biegemoment auf das Kipplager 17 aus.

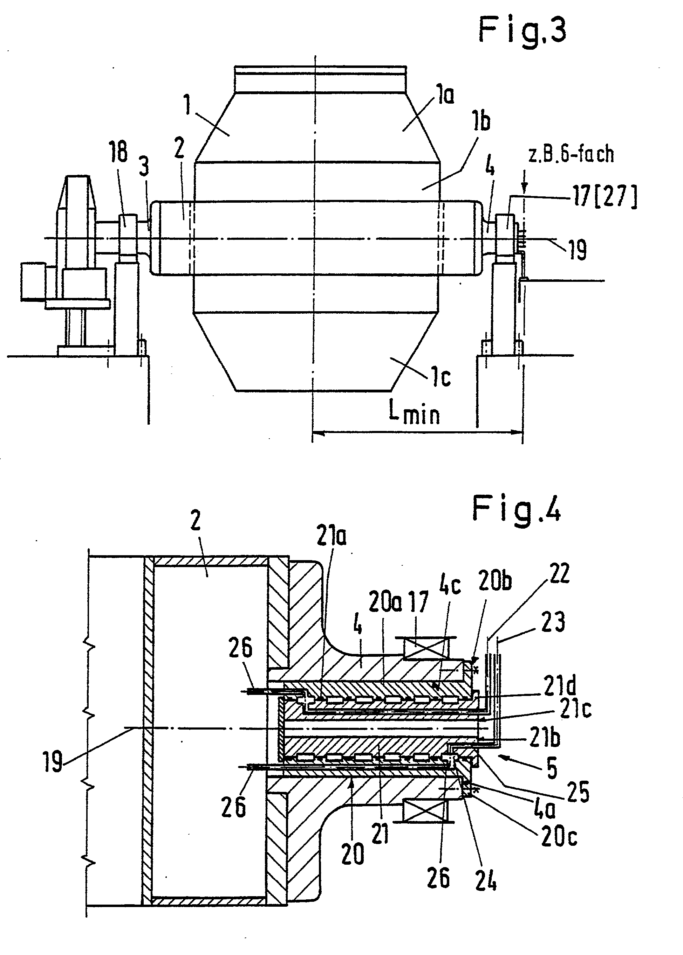

Die Erfindung (Fig. 3 und 4) sieht bei einem weitestgehend gleich ausgebildeten metallurgischen Gefäß 1, das ebenfalls in dem Tragring 2 abgestützt ist und um die Kippzapfen 3 und 4 in Kipplagern 17 und 18 um die Kippachse 19 schwenkbar ist, einen Rotor 20 und einen Stator 21 vor, die im Ausführungsbeispiel mit ihrer ganzen Länge im Innern des Kippzapfens 4 angeordnet sind. Der Stator 21 bildet hier jedoch einen Kern zum Rotor 20, und der Rotor 20 ist deshalb in Form einer Hülse 20a ausgeführt, die zwischen der Innenwandung 4c des Kippzapfens 4 und der Außenfläche 21a des Stators 21 liegt. Die Medien-Leitungen 22, 23 usw. sind an der Stirnfläche 21b des Stators 21 angeschlossen. Die übrigen Medien-Leitungen sind über den Umfang der Stirnfläche 21b des Stators 21 versetzt angeordnet und deshalb in Fig. 4 nicht sichtbar. Jeder der vorhandenen Medien-Leitungen ist ein Ringnutenpaar 24, eine Axial-Leitung 25 innerhalb des Stators 21 und eine Axial-Leitung 26 innerhalb des Rotors 20 zugeordnet. Die Medien-Leitungen führen alle aus dem Rotor 20 mit der Axial-Leitung 26 zu den (nicht gezeigten) Düsen bzw. zu den (nicht gezeigten) Kühlelementen, die sich im Bereich des Gefäßoberteils 1a, des Gefäßmittelteils 1b und/oder des Gefäßunterteils 1c befinden können. Die (nicht gezeigten) Düsen sind meist im Bereich des Gefäßunterteils 1c angeordnet.

Die Drehdurchführung 5 in einem oder beiden der Kippzapfen 3 und 4 ist aufgrund der Erfindung (Fig. 3) auf der Loslager-Seite 27 angeordnet.

Der Rotor 20 als auch der Stator 21 weisen an ihren jeweils nach außen ragenden Enden 20b bzw. 21c einen Anschlagflansch 20c bzw. einen Anschlagflansch 21d auf, die den Abstand der Ringnutenpaare 24 zur Stirnfläche 4a des Kippzapfens 4 exakt festlegen. Selbstverständlich kann die Ringnute eines Ringnutenpaares 24 ganz auch nur entweder im Rotor 20 oder ganz auch nur im Stator 21 angeordnet sein. Der Anschlagflansch 20c kann bei längeren Drehdurchführungen 5 auch in der Längenmitte oder an anderer Stelle der Länge angeordnet sein.

## Patentansprüche

1. Metallurgisches Gefäß mit Kippzapfen, insbesondere Stahlwerkskonverter, mit zumindest einer Drehdurchführung in einem der Kippzapfen zur Versorgung von Düsen bzw. Kühlelementen mit gasförmigen und/oder flüssigen und/oder staubförmigen Medien bzw. Kühlmedien, wobei die Drehdurchführung aus einem Stator und einem Rotor besteht und die Medien-Leitungen an den Stator angeschlossen sind und vom Rotor die Medien-Leitungen zu den Düsen bzw. Kühlelementen geführt sind und der Rotor mit dem Kippzapfen verbunden ist, dadurch gekennzeichnet, daß Rotor (20) und Stator (21) zumindest auf einem erheblichen Teil ihrer Länge jeweils innerhalb des Kippzapfens (4) angeordnet sind, wobei der Stator (21) den Kern zum Rotor (20) bildet und der Rotor (20) als Hülse (20a) zwischen Innenwandung (4c) des Kippzapfens (4) und Außenfläche (21a) des Stators (21) angeordnet ist und daß die Medien-Leitungen (22, 23) an der Stirnfläche (21b) des Stators (21) angeschlossen sind.

2. Metallurgisches Gefäß nach Anspruch 1, dadurch gekennzeichnet, daß die Drehdurchführung (5) in dem Kippzapfen (4) der Loslager-Seite (27) des Konverterkippgestells angeordnet ist.

3. Metallurgisches Gefäß nach den Ansprüchen 1 und 2, dadurch gekennzeichnet, daß sowohl der Rotor (20) als auch der Stator (21) an ihrem einen Ende (20b, 21c) jeweils mit einem Anschlagflansch (20c, 21d) versehen sind.

## Claims

1. A metallurgical container with a trunnion, in particular a steel converter, having at least one rotary transmission lead-through in one of the trunnions for supplying nozzles or cooling elements with gaseous and/or liquid and/or powdered media or cooling media respectively, with the rotary lead-through consisting of a stator and a rotor and the media lines being connected to the stator, and the media lines passing from the rotor to the nozzles or cooling elements, and the rotor being connected to the trunnion, characterised in that the rotor (20) and stator (21) are each arranged within the trunnion (4) for at least a substantial part of its length, with the stator (21) forming the core of the rotor (20) and the rotor (20) being disposed as a sleeve (20a) between the inner wall (4c) of the trunnion (4) and the outer surface (21a) of the stator (21), and that the media lines (22, 23) are connected to the end face (21b) of the stator (21).

2. A metallurgical container according to claim 1, characterised in that the rotary lead-through (5) is disposed in the trunnion (4) of the movable bearing side (27) of the converter tilting stand.

3. A metallurgical container according to claims 1 and 2, characterised in that both the rotor (20) and the stator (21) are each provided at one end (20b, 21c) with a stop flange (20c, 21d).

## Revendications

1. Récipient métallurgique à tourillons basculants, en particulier convertisseur d'aciérie, comportant au moins un passage tournant dans un des tourillons basculants pour fournir, à des buses ou des éléments de refroidissement, des fluides ou fluides de refroidissement gazeux et/ou liquides et/ou poudreux, le passage tournant étant constitué d'un stator et d'un rotor, et les conduits de fluide étant raccordés au stator et, du rotor, les conduits de fluide étant guidés vers les buses ou les éléments de refroidissement, et le rotor étant relié au tourillon basculant, caractérisé en ce que le rotor (20) et le stator (21) sont agencés, au moins sur une partie importante de leur longueur, à chaque fois à l'intérieur du tourillon basculant (4), le stator (21) formant l'âme par rapport au rotor (20) et le rotor (20) étant agencé sous forme de manchon (20a) entre la paroi interne (4c) du tourillon basculant (4) et la surface externe du stator (21), et en ce que les conduits de fluide (22, 23) sont raccordés à la face frontale (21b) du stator (21).

2. Récipient métallurgique selon la revendication 1, caractérisé en ce que le passage tournant (5) est agencé dans le tourillon basculant (4) du côté du palier libre (27) du bâti basculant du convertisseur.

3. Récipient métallurgique selon les revendications 1 et 2, caractérisé en ce qu'aussi bien le rotor (20) que le stator (21) sont munis, à chaque fois, d'une bride de butée (20c, 21d) à une de leurs exrémités (20b, 21c).

# Fig.1

# Fig.2

# Fig.3

# Fig.4